# EUROPEAN PATENT SPECIFICATION

(11) **EP 2 350 791 B1**
(45) Date of publication and mention of the grant of the patent: **16.01.2013**
(21) Application number: 09786372.4
(22) Date of filing: 24.04.2009
(51) Int. Cl.: G06F 3/042

(54) **TOUCH SENSITIVE DEVICE USING OPTICAL GRATINGS**
BERÜHRUNGSEMPFINDLICHE ANORDNUNG MIT OPTISCHEN GITTERN
DISPOSITIF TACTILE UTILISANT DES RÉSEAUX OPTIQUES

(30) Priority: 27.10.2008 US 258582
(43) Date of publication of application: 03.08.2011
(73) Proprietor: Sony Ericsson Mobile Communications AB, 221 88 Lund (SE)
(72) Inventor: HANSSON, Bjorn, S-192 54 Sollentuna (SE)
(74) Representative: Valea AB
(86) International application number: PCT/IB2009/051702
(87) International publication number: WO 2010/049823

(56) References cited:
- WO-A2-2007/003196
- US-A1- 2007 152 985

## Description

### BACKGROUND

Touch panels, touch screens, keypads and keyboards may be used in many electronic devices, such as cellular telephones, computers, personal digital assistants (PDAs), smartphones, portable gaming devices, media player devices, camera devices, etc. Additionally, many handheld electronic devices include some kind of display to provide a user with visual information. These devices may also include an input device, such as a keypad, touch screen, and/or one or more buttons to allow a user to enter some form of input. A growing variety of applications and capabilities for electronic devices, such as handheld electronic devices, continues to drive a need for improved user input techniques.

### SUMMARY

The invention is defined by the independent claims.

In one exemplary embodiment, a touch sensitive device comprises a deformable material having optical gratings embedded therein, wherein deformation of the deformable material by a touch changes an optical path length of one or more of the optical gratings in a vicinity of the touch. The touch sensitive device further comprises a light source configured to send light into the deformable material to reflect off of, or transmit through, one or more of the optical gratings, and a light detector configured to detect at least a portion of the light reflected from, or transmitted through, the one or more of the optical gratings. Furthermore, the touch sensitive device comprises a processing unit configured to determine if the touch has occurred on the deformable material based on the detected reflection of the at least a portion of the light off of the one or more of the optical gratings or based on the detected transmission of the at least a portion of the light through the one or more of the optical gratings.

Further embodiments of a touch sensitive device are defined in the dependent claims.

In another exemplary embodiment a method comprises transmitting light through a deformable material having an optical grating embedded therein. The method further comprises detecting light reflected from, or transmitted through, the optical grating, and determining whether the deformable material has been deformed by a touch based on the detected light reflected from, or transmitted through, the optical grating, wherein deformation of the deformable material by the touch changes an optical path length of the optical grating.

Further embodiments of a method are defined in the dependent claims.

### BRIEF DESCRIPTION OF THE DRAWINGS

The accompanying drawings, which are incorporated in and constitute a part of this specification, illustrate one or more embodiments described herein and, together with the description, explain these embodiments. In the drawings:
FIG. 1 is a diagram illustrating an overview of exemplary embodiments described herein;
FIG. 2 is a block diagram illustrating components of an electronic device according to an exemplary implementation;
FIG. 3 is a diagram illustrating an exemplary implementation of the electronic device of FIG. 2 where the electronic device includes a cellular radiotelephone;
FIG. 4 is a diagram that depicts a principle of operation of a deformable material having an optical grating disposed within it according to an exemplary embodiment;
FIG. 5A is a diagram that depicts a touch being applied to the deformable material of FIG. 4 in a "reflection" mode of operation;
FIG. 5B is a diagram that depicts a touch being applied to the deformable material of FIG. 4 in a "transmission" mode of operation;
FIG. 6 is a diagram that depicts the use of a transmittive optical grating according to one exemplary "reflection" mode implementation;
FIG. 7 is a diagram that depicts an exemplary implementation that uses multiple optical gratings disposed within a deformable material to detect a location of a touch upon the deformable material;
FIGS. 8A and 8B are diagrams that depict another exemplary implementation that uses multiple optical gratings disposed within a deformable material to detect a location of a touch upon the deformable material;
FIG. 9 is a diagram that depicts a further exemplary implementation that uses multiple parabolic-shaped optical gratings disposed within a deformable material to detect a location of a touch upon the deformable material;
FIG. 10 is a diagram that depicts an additional exemplary that uses multiple optical gratings disposed within a deformable material to detect a location of a touch upon the deformable material;
FIGS. 11A and 11B are diagrams that depict additional exemplary implementations that use multiple optical gratings disposed within an optical waveguide to detect a location of a touch upon the optical waveguide; and
Fig. 12 is a flow diagram illustrating an exemplary process for determining whether a touch has occurred on a deformable material embedded with optical gratings and for identifying a location of the touch.

### DETAILED DESCRIPTION

The following detailed description refers to the accompanying drawings. The same reference numbers in different drawings may identify the same or similar elements. Also, the following detailed description does not limit the invention.

### OVERVIEW

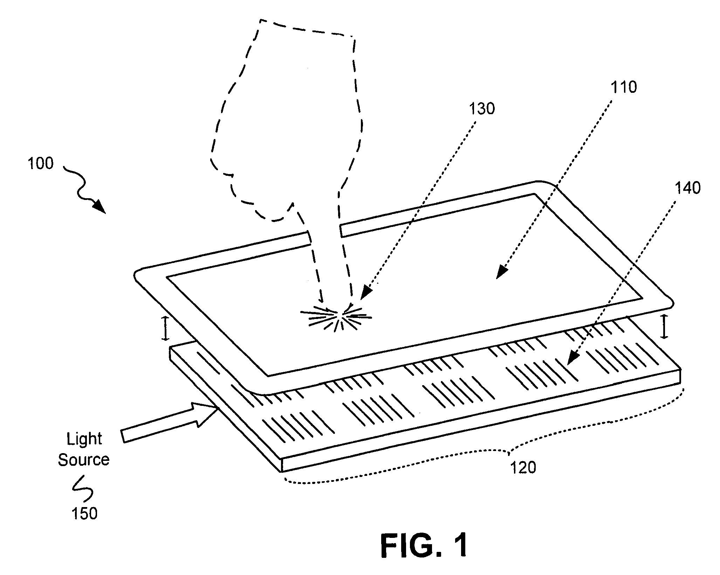

FIG. 1 illustrates an overview of the use of a deformable material having reflective optical gratings disposed within it for detecting a touch applied to the material and for identifying a location of the touch upon the deformable material. As shown in the exploded view of FIG. 1, a touch sensitive device 100 may have a touch surface 110 that may include a touch pad, touch screen, keypad or keyboard. Touch sensitive device 100 may include any type of device that may have a touch pad, touch screen, keypad or keyboard, including, but not limited to, a cellular telephone, a computer, a personal digital assistant (PDA), a smartphone, a portable gaming device, a media player device, a camera device, etc.

As further shown in FIG. 1, a deformable material 120 may be located in contact with touch surface 110 such that pressure applied to touch surface 110 may be transmitted to deformable material 120, causing material 120 to deform in the vicinity of the point of pressure 130. FIG. 1 depicts a "touch" 130 being applied to touch surface 110. The term "touch," as used herein, may refer to a touch of an object, such as a body part (e.g., a finger) or a pointing device (e.g., a stylus, pen, etc.).

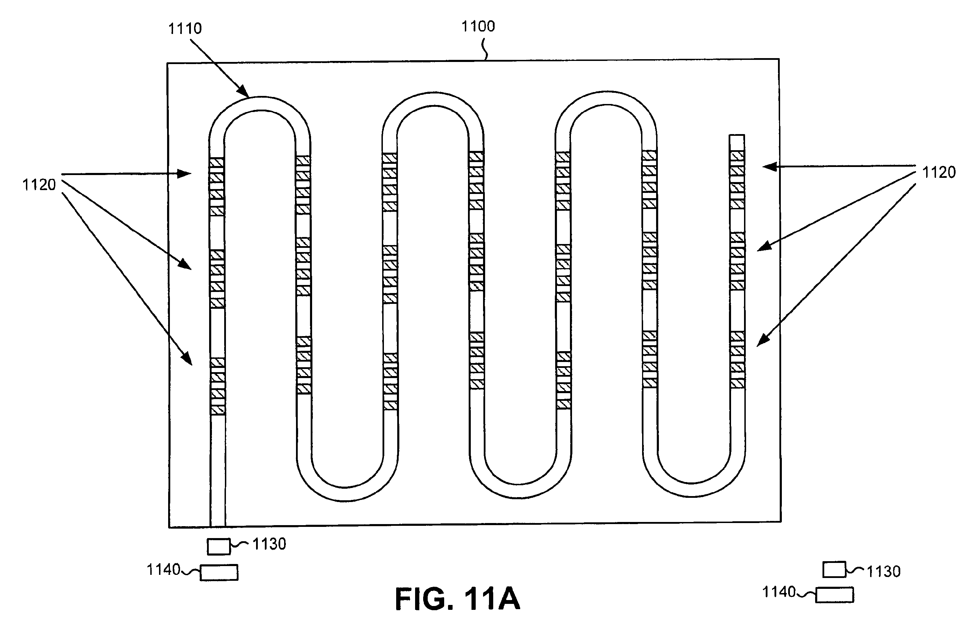

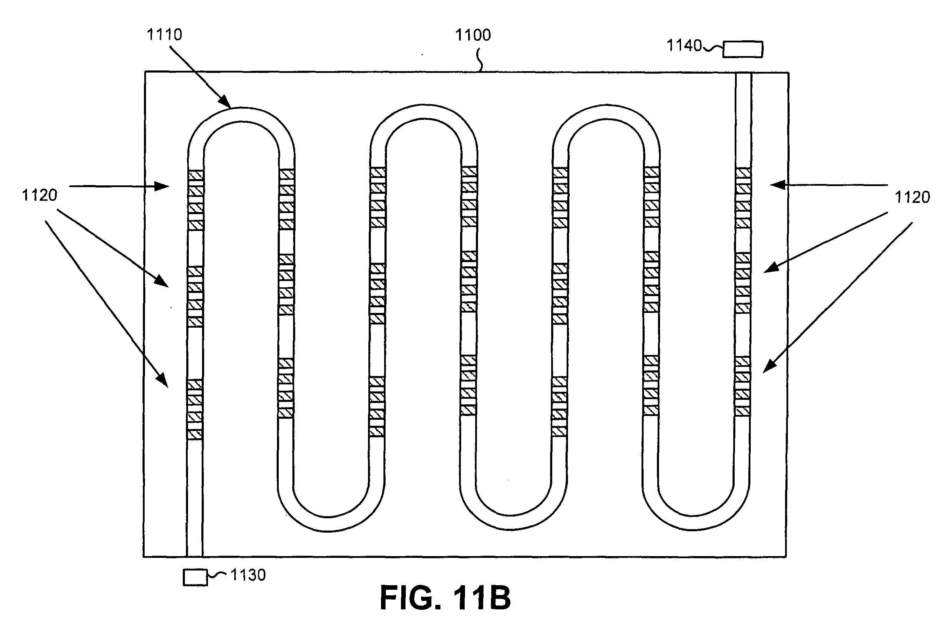

Deformable material 120 may have multiple reflective optical gratings 140 disposed within material 120. The optical gratings 140 may be disposed within deformable material 120 using various techniques, including, via usage of different types of masks, ion diffusion/exchange, ultra-violet (UV) exposure or other techniques to locally change the refractive index of material 120. Optical gratings 140 may also be generated via interference between two UV beams. Deformable material 120 may include any type of material that may temporarily deform based on physical pressure and which is transmissive to light (e.g., transmissive to a range of wavelengths of light used in touch sensitive device 100). The material of deformable material 120 may include, for example, a thin, clear plastic film, glass, or glass-like materials. In some implementations, deformable material 120 and touch surface 110 may be one and the same. In these implementations, optical gratings 140 may be disposed within the glass or plastic of touch surface 110. In certain implementations, deformable material 120 may include an optical waveguide, into which optical gratings may be disposed, as described further below with respect to FIGS. 11A and 11B.

As material 120 deforms within a vicinity of touch 130 being applied to touch surface 110, optical gratings 140 located in the vicinity of touch 130 may also deform, affecting their reflective properties. Changes in the reflective properties of optical gratings 140, caused by their deformation due to touch 130 being applied to touch surface 110, may affect the wavelength of light reflected from optical gratings 140.

FIG. 1 further illustrates a light source 150 transmitting light through deformable material 120. The light from light source 150 may reflect off of one or more of optical gratings 140 and the reflected light, or light transmitted through the one or more optical gratings, may be detected by one or more detectors (not shown). As described further below, deformation of material 120 in a vicinity of one or more of optical gratings 140 may affect the wavelength of the reflected light, thus, enabling the detection of the touch applied to touch surface 110. In some implementations described in further detail below, a location of the touch upon deformable material 120 may be identified based on the detected reflected light or transmitted light. Light source 150 may include a continuous light source or a pulsed light source. A pulsed light source may conserve power and also may make the touch detection more robust in relation to external influences such as sunlight.

### EXEMPLARY DEVICE

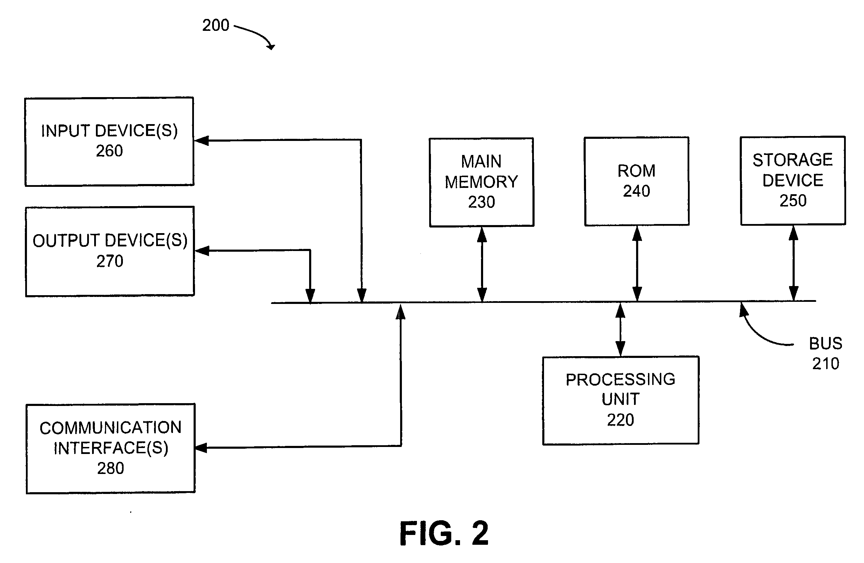

FIG. 2 is a diagram of an electronic device 200 in which methods and systems described herein may be implemented. Electronic device 200 may incorporate touch sensitive device 100 described above with respect to FIG. 1. Implementations are described herein in the context of a device having a keypad, touch screen, keyboard or touch panel. As used herein, the term "electronic device" may include a cellular radiotelephone; a smart phone, a Personal Communications System (PCS) terminal that may combine a cellular radiotelephone with data processing, facsimile and data communications capabilities; a personal digital assistant (PDA) that can include a radiotelephone, pager, Internet/Intranet access, Web browser, organizer, calendar and/or a global positioning system (GPS) receiver; a gaming device; a media player device; a digital camera; or any other type of device that may use touch input.

FIG. 2 is a block diagram that depicts exemplary components of electronic device 200. As illustrated, device 200 may include a bus 210, a processing unit 220, a main memory 230, a read only memory (ROM) 240, a storage device 250, an input device(s) 260, an output device(s) 270, and a communication interface(s) 280. Bus 210 may include a path that permits communication among the elements of device 200.

Processing unit 220 may include a conventional processor, microprocessor, or processing logic that may interpret and execute instructions. Main memory 230 may include a random access memory (RAM) or another type of dynamic storage device that may store information and instructions for execution by processor 220. ROM 240 may include a conventional ROM device or another type of static storage device that may store static information and instructions for use by processing unit 220. Storage device 250 may include a magnetic and/or optical recording medium and its corresponding drive.

Input device 260 may include a mechanism that permits an operator to input information to the client/server entity, such as a mouse, a pen, voice recognition and/or biometric mechanisms, etc. Input device 260 may further include touch sensitive device 100 described above with respect to FIG. 1. Output device 270 may include a mechanism that outputs information to the operator, including a display, a printer, a speaker, etc. Communication interface 280 may include any transceiver-like mechanism that enables device 200 to communicate with other devices and/or systems.

Device 200 may perform certain operations or processes described herein. Device 200 may perform these operations in response to processing unit 220 executing software instructions contained in a computer-readable medium, such as memory 230. A computer-readable medium may be defined as a physical or logical memory device. Each of main memory 230, ROM 240 and storage device 250 may include computer-readable media. The magnetic and/or optical recording media (e.g., readable CDs or DVDs) of storage device 250 may also include computer-readable media.

The software instructions may be read into memory 230 from another computer-readable medium, such as data storage device 250, or from another device via communication interface 280. The software instructions contained in memory 230 may cause processing unit 220 to perform operations or processes described herein. Alternatively, hardwired circuitry may be used in place of or in combination with software instructions to implement processes described herein. Thus, implementations described herein are not limited to any specific combination of hardware circuitry and software.

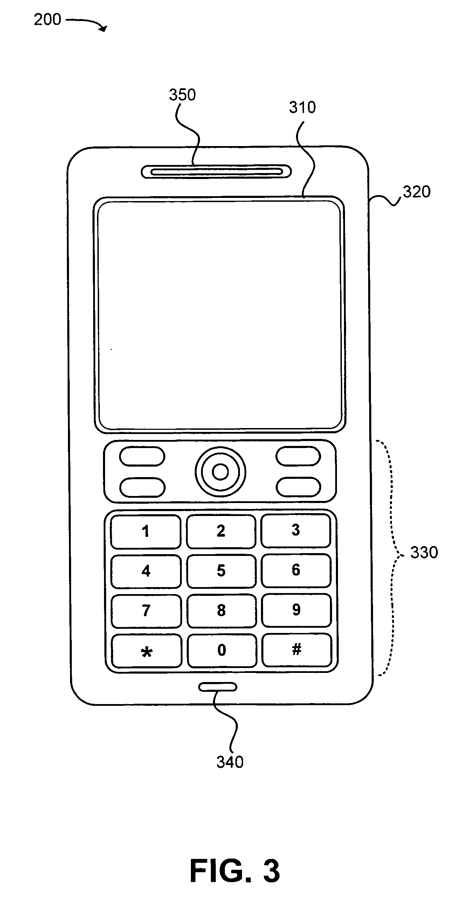

FIG. 3 depicts an exemplary implementation in which electronic device 200 includes a cellular radiotelephone. As shown, the cellular radiotelephone 200 may include a display and touch panel 310, a housing 320, a keypad 330, a microphone 340, and a speaker 350. Display and touch panel 310 and/or keypad 330 may correspond to touch sensitive device 100 described above. The components described below with respect to electronic device 200 are not limited to those described herein. Other components, such as a camera, connectivity ports, memory slots, and/or additional speakers, may be located on radiotelephone 300.

Display and touch panel 310 may include a device that can display signals generated by electronic device 200 as text or images on a screen (e.g., a liquid crystal display (LCD), cathode ray tube (CRT) display, organic light-emitting diode (OLED) display, surface-conduction eletro-emitter display (SED), plasma display, field emission display (FED), bistable display, etc.). Display and touch panel 310 may correspond to touch surface 110 of FIG. 1.

Housing 320 may protect the components of electronic device 200 from outside elements. Keypad 330 may provide input to electronic device 200. Keypad 330 may include a standard telephone keypad. Keys on keypad 330 may perform multiple functions depending upon a particular application selected by the user. In one implementation, each key of keypad 330 may be, for example, a pushbutton. A user may utilize keypad 330 for entering information, such as text or a phone number, or activating a special function. Alternatively, keypad 330 may take the form of a keyboard that may facilitate the entry of alphanumeric text.

Microphone 340 may receive audible information from the user. Microphone 340 may include any component capable of transducing air pressure waves to a corresponding electrical signal. Speaker 350 may provide audible information to a user of electronic device 200. Speaker 350 may include any component capable of transducing an electrical signal to a corresponding sound wave. For example, a user may listen to music through speaker 350.

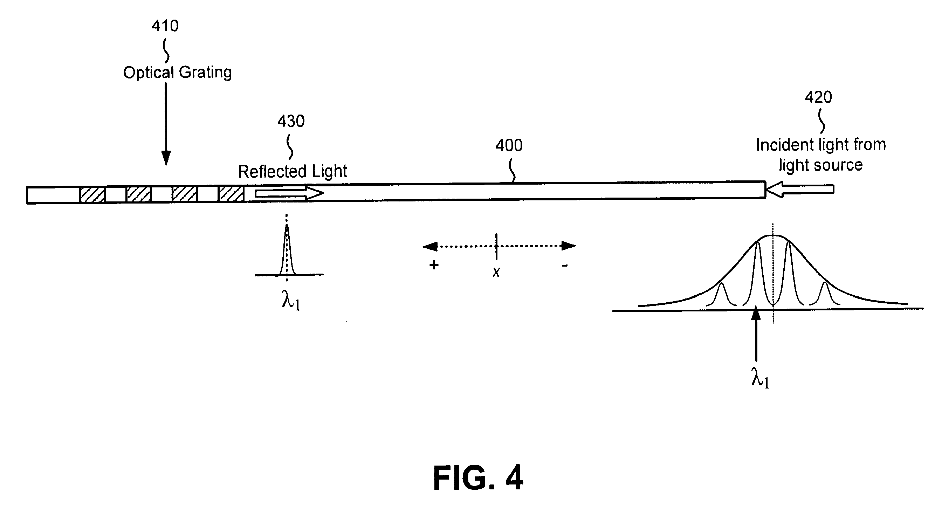

FIG. 4 is a diagram that depicts a principle of operation of a deformable material having an optical grating disposed within it according to an exemplary embodiment. As shown in FIG. 4, a deformable material 400 may be configured as a thin film (e.g., plastic, glass or a glass-like material) that may have one or more optical gratings disposed within it. A single optical grating 410 is shown in FIG. 4 by way of example. During operation, light 420 from a light source, having a spectrum that includes a wavelength λ₁, may be transmitted in a positive (+) x direction through material 400 to encounter reflective optical grating 410. As further shown in FIG. 4, the spectrum of incident light 420 may include multiple wavelengths, in addition to wavelength λ₁, where each of the multiple wavelengths may correspond to additional optical gratings (not shown) disposed within deformable material 400. Upon encountering reflective optical grating 410, the light incident upon optical grating 410 may reflect as light 430 having a wavelength λ₁ and may travel in a negative (-) direction through material 400 such that reflected light 430 can be detected by a detector (not shown).

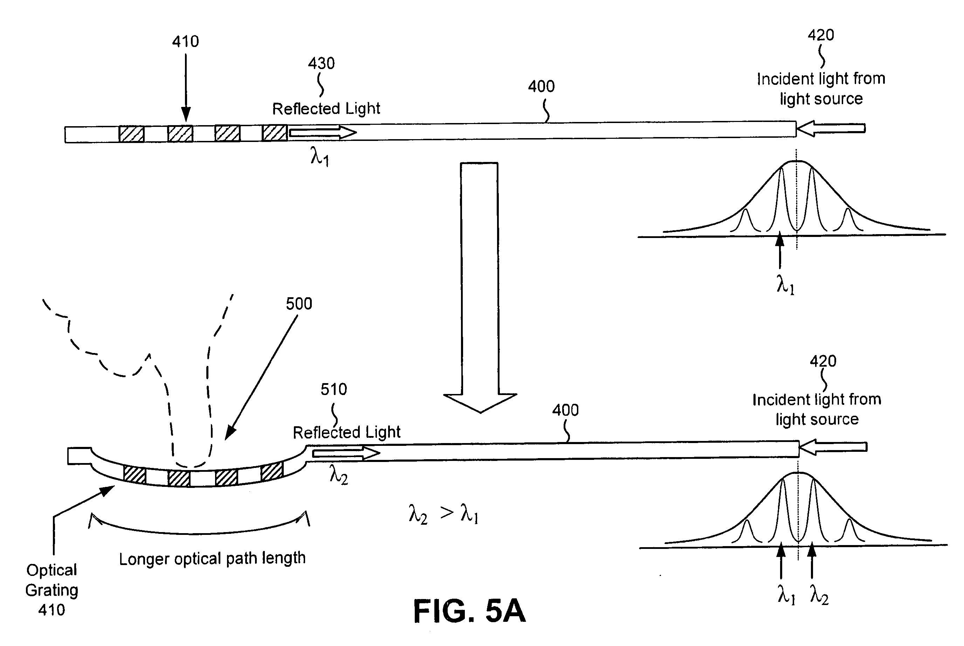

FIG. 5A is a diagram that depicts a touch being applied to the deformable material of FIG. 4 in an exemplary embodiment that uses a "reflection" mode of operation. In the reflection mode of operation depicted in FIG. 5A, light reflected from an optical grating may be used to determine if a touch has occurred in a vicinity of the optical grating. As shown in FIG. 5A, a touch 500 may be applied at a location on material 400 that corresponds to where an optical grating 410 is disposed within material 400. The pressure applied by touch 500 to material 400 causes material 400 to deform, further causing optical grating 410 to deform. Deformation (e.g., stretching) of optical grating 410 increases the optical path length of optical grating 410 and, thus, changes the period of the grating. Due to the change in the period of the grating, the incident light, when it is reflected from optical grating 410, may be reflected as reflected light 510 have a longer wavelength λ₂. Detection of the longer wavelength of light, or detection of an absence of the original wavelength of light, may provide an indication that a touch has occurred in the vicinity of optical grating 410.

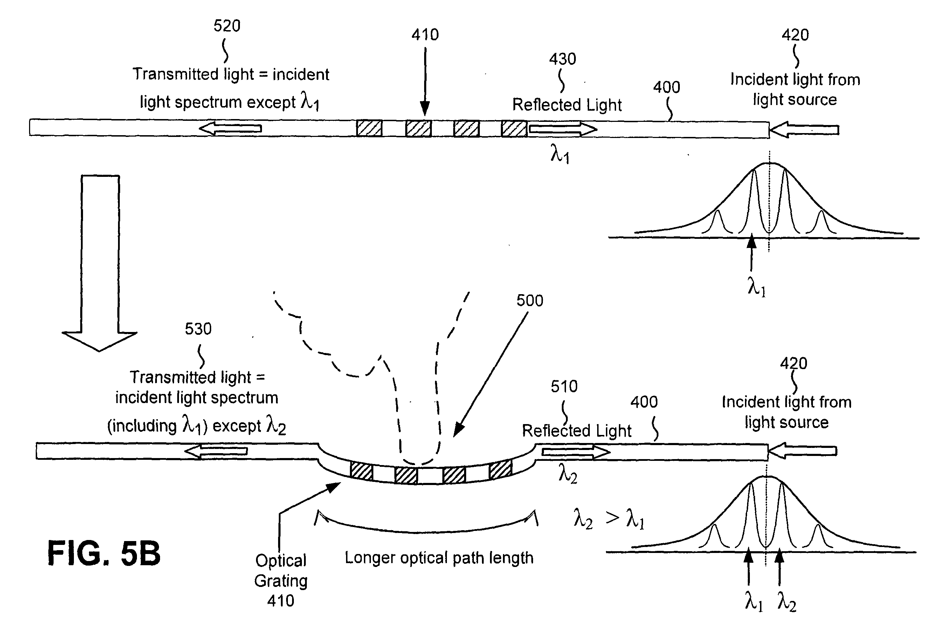

FIG. 5B is a diagram that depicts a touch being applied to the deformable material of FIG. 4 in an exemplary embodiment that uses a "transmission" mode of operation. In the transmission mode of operation depicted in FIG. 5B, light transmitted through an optical grating may be used to determine if a touch has occurred in a vicinity of the optical grating. As shown in FIG. 5B, when no touch has occurred in a vicinity of optical grating 410, optical grating 410 may reflect light 430 having a wavelength of λ₁ and optical grating 410 may transmit the remaining spectrum of incident light 420, which includes the spectrum of incident light 420 except for wavelength λ₁ of reflected light 430. Upon a touch 500 being applied at a location on material 400 that corresponds to where an optical grating 410 is disposed within material 400, the incident light 420 may be reflected from optical grating 410 as reflected light 510 having a longer wavelength λ₂. Optical grating 410 may transmit the remaining spectrum of incident light 420, which includes the spectrum of incident light 420 (including wavelength λ₁) except for wavelength λ₂. Thus, detection of the absence of wavelength λ₂, or the detection of the presence of wavelength λ₁, in the transmitted light 530 may be used to determine that a touch has occurred in a vicinity of optical grating 410.

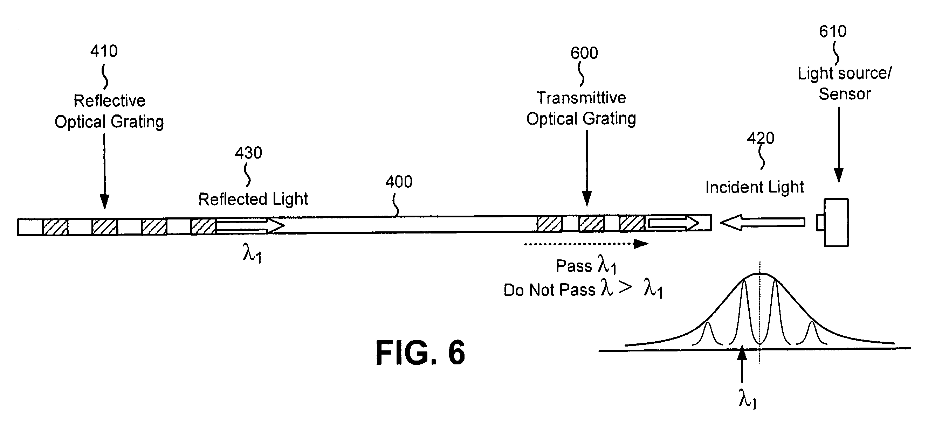

FIG. 6 is a diagram that depicts an exemplary "reflection" mode implementation in which an optical grating may be placed in the deformable material in the vicinity of the light sensor so as to pass only certain wavelengths of light to a light sensor. As shown in FIG. 6, a transmittive optical grating 600 may be disposed in deformable material 400 in close proximity to a light source and sensor 610. Optical grating 600 may be configured such that grating 600 only passes light of a certain wavelength, and blocks light of other wavelengths. For example, optical grating 600 may be configured such that grating 600 passes light of a wavelength λ₁ emitted by light source 610, but does not pass light of wavelengths greater than wavelength λ₁.

When incident light of wavelength λ₁ from light source 610 encounters reflective optical grating 410 in an un-deformed state, reflected light 430 of the same wavelength λ₁ may be transmitted back towards light source and sensor 610. Reflected light 430 of wavelength λ₁ may pass through transmittive optical grating 600 for detection by light sensor 610. However, if reflective optical grating 410 is deformed, as described with respect to FIG. 5A above, optical grating 410 may reflect incident light 420 at wavelength λ₂as reflected light 430, where λ₂ > λ₁. Transmittive optical grating 600 may not pass reflected light 430 at wavelength λ₂, thus, preventing detection of reflected light 430 at light sensor 610. The absence of detected light at light sensor 610 may serve as an indication that there has been a touch at optical reflective grating 410. While FIG. 6 depicts the placement of an optical grating in the deformable material in the vicinity of the light sensor with respect to the reflection mode of FIG. 5A, the optical grating may be placed similarly in the transmission mode depicted in FIG. 5B.

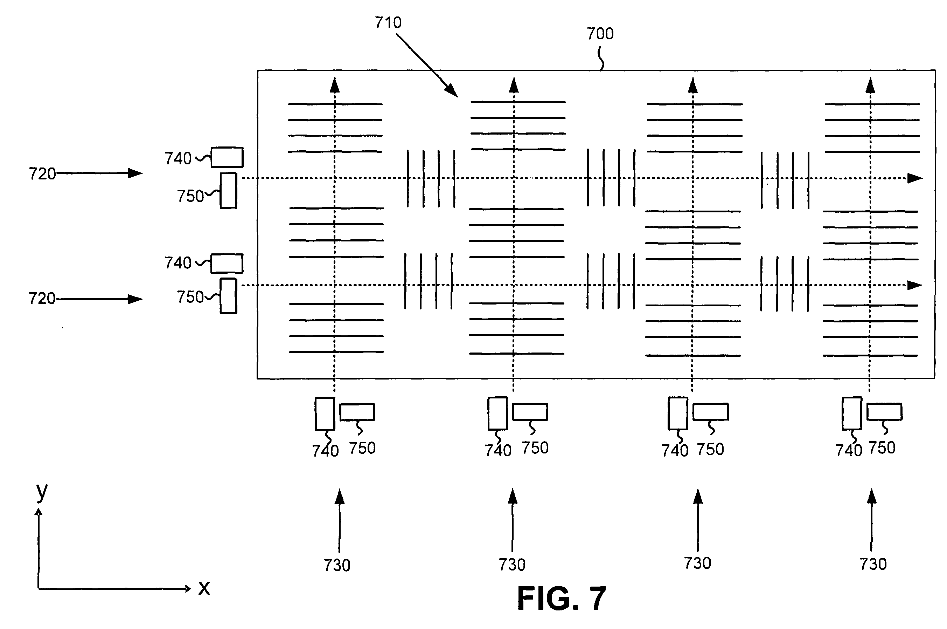

FIG. 7 is a diagram that depicts an exemplary implementation that uses multiple optical gratings disposed within a deformable material to detect a location of a touch upon the deformable material. In the exemplary implementation of FIG. 7, reflective optical gratings 710 may be disposed in a deformable material 700 in a row 720 and column 730 pattern. Each row 720 may consist of a sequence of reflective optical gratings 710 spaced apart from one another along a single axis. Each row 720 may further include a light source 740 for emitting light into deformable material 700 along the row 720 and an optical detector 750 for detecting light reflected back from optical gratings located in row 720. Each column 730 may also consist of a sequence of reflective optical gratings 710 spaced apart from one another along a single axis that may be perpendicular to the axis of each row 720. Each column 730 may further include a light source 740 for emitting light into deformable material 700 along the column 730 and an optical detector 750 for detecting light reflected back from optical gratings located in column 730. The size of optical gratings 710 and their spacing among one another in rows 720 and columns 730 may be selected such that pressure applied anywhere to a surface of material 700 may result in both a row 720 optical grating and a column optical grating 730 being deformed. Thus, any touch applied to material 700 may generate a row and column detection by detectors 750 that can enable the determination of where on material 700 that the touch has occurred.

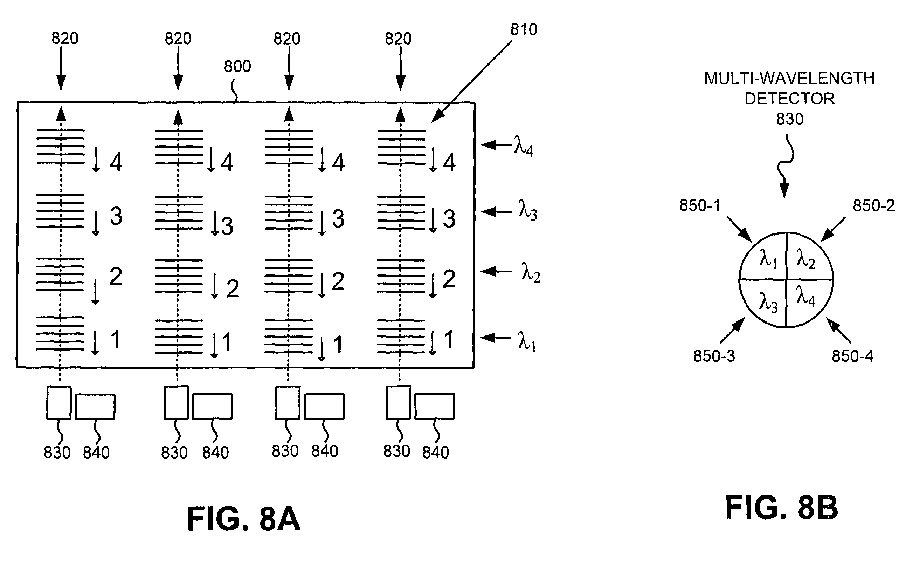

FIGS. 8A and 8B are diagrams that depict another exemplary implementation that uses multiple optical gratings disposed within a deformable material to detect a location of a touch upon the deformable material. In the exemplary implementation of FIG. 8A, reflective optical gratings 810 may be disposed in a deformable material 800 in columns 820. Each column 820 may include a sequence of reflective optical gratings 810 spaced apart from one another along an axis. Within a given column 820, each reflective optical grating 810 may be configured such that it reflects a different wavelength based on a light source of wavelength λ. For example, in a given column, optical grating 1 may be configured to reflect a wavelength of λ₁, optical grating 2 may be configured to reflect a wavelength of λ₂ , optical grating 3 may be configured to reflect a wavelength of λ₃ , and optical grating 4 may be configured to reflect a wavelength of λ₄. Each column 820 may further include a light source 830 for emitting light into material 700 along the column 820 and a multi-wavelength optical detector 840 for detecting multiple different wavelengths of light reflected from optical gratings within the column 820.

When pressure is applied to material 800 in the vicinity of any of optical gratings 810, the reflected wavelength for that optical grating may change to a wavelength that cannot be detected by a respective multi-wavelength detector 830. FIG. 8B depicts further details of multi-wavelength detector 830. Detector 830 may include multiple different filters (e.g., one for each reflective optical grating in column 820) for detecting each of the different reflected wavelengths of light (e.g., λ₁, λ₂, λ₃, λ₄). FIG. 8B depicts an exemplary implementation of detector 830 in which detector 830 includes four different filters 850-1, 850-2, 850-3 and 850-4 for detecting respective wavelengths λ₁, λ₂, λ₃ , λ₄. Therefore, when deformation of a respective optical grating 810 of material 800 causes the reflected wavelength of that optical grating to change, multi-wavelength detector 830 may no longer be able to detect the reflection from that optical grating (i.e., indicating a touch at that optical grating). For example, if optical grating 1 in column 820, which normally reflects light from light source 830 as light having a wavelength of λ₁, is deformed, then the wavelength of the reflected light from optical grating 1 may increase to wavelength λ₁+Δ that does not equal any of wavelengths λ₁, λ₂, λ₃ or λ₄. Multi-wavelength detector 830 may then be unable to detect the reflected wavelength λ₁+Δ from optical grating 1, thus, indicating a touch at optical grating 1 in column 820.

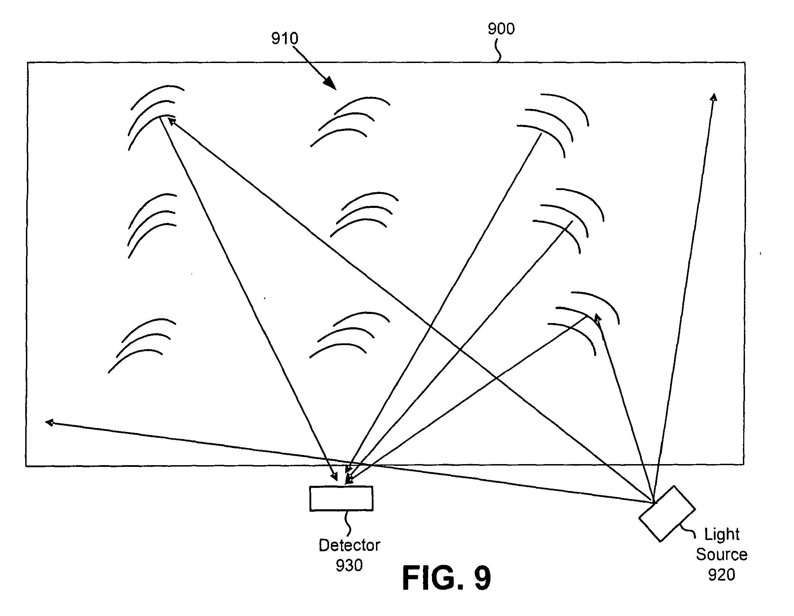

FIG. 9 illustrates a further exemplary embodiment that uses multiple optical gratings disposed within a deformable material to detect a location of a touch upon the deformable material, where the optical gratings include parabolic-shaped reflective optical gratings. As shown in FIG. 9, multiple parabolic-shaped reflective optical gratings 910 may be disposed within a deformable material 900. The parabolic shape of each of optical gratings, and the orientation of each relative to an optical detector 930 and light source 920, may be configured such that light emitted from light source 920 may be reflected from each of optical gratings 910 and the reflected light may be focused on optical detector 930. The operation of optical gratings 910 for detecting touches upon material 900 may be similar to that described above with respect to other exemplary implementations. Use of parabolic shaped optical grating, in the exemplary implementation of FIG. 9, permits a reduction in a number of light sources and detectors that may be required for detecting a location of a touch upon deformable material 900.

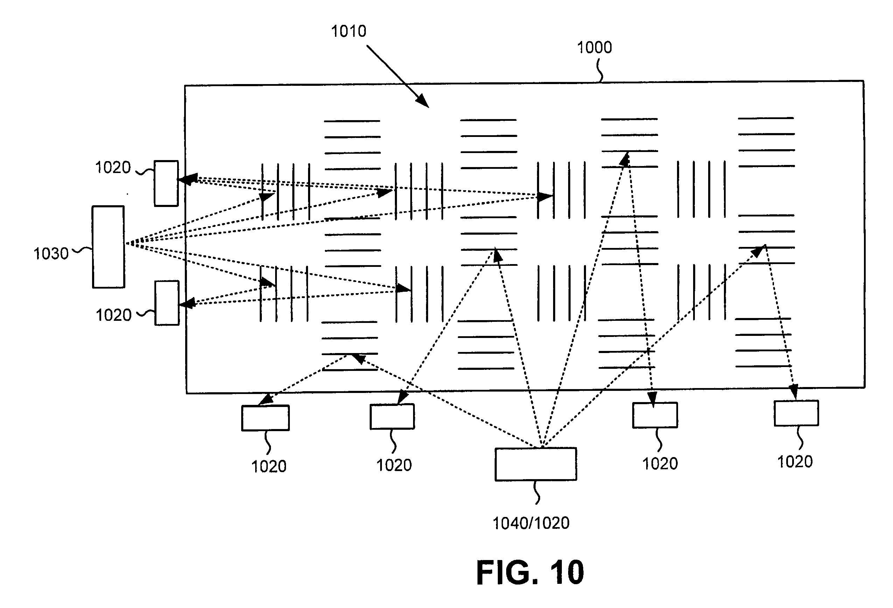

FIG. 10 is a diagram that depicts an additional exemplary implementation that uses multiple optical gratings disposed within a deformable material to detect a location of a touch upon the deformable material, where fewer light sources may be used. In the exemplary implementation of FIG. 10, reflective optical gratings 1010 may be disposed in a deformable material 1000 in a row and column pattern similar to FIG. 7. In the exemplary implementation of FIG. 10, optical detectors 1020 may be used for each row and column, similar to the exemplary implementation of FIG. 7. However, fewer light sources may be used for emitting light into deformable material 1000. FIG. 10 depicts a single light source 1030 being used for emitting light through all of the rows of optical gratings disposed within material 1000 and another single light source 1040 (possibly combined with an optical detector 1020) being used for emitting light through all of the columns of optical gratings disposed within material 1000. The exemplary implementation of FIG. 10 permits a reduction in a number of light sources that may be required for detecting a location of a touch upon reformable material 1000.

FIG. 11A depicts yet another exemplary implementation that uses multiple optical gratings disposed within a deformable material to detect a location of a touch upon the deformable material, where an optical waveguide(s) may be disposed within the deformable material. In the exemplary implementation of FIG. 11, an optical waveguide 1110 may be disposed within a deformable material 1100, where the optical waveguide 1110 is itself deformable based on applied physical pressure (e.g., a touch). In one exemplary implementation, optical waveguide 1110 may include an optic fiber. Reflective optical gratings 1120 may be disposed at selected locations within optic waveguide 1110. Light sources 1130 may emit light into optical waveguide 1110 and optical detectors 1140 may detect light reflected from optical gratings 1120. The exemplary implementation of FIG. 11A, therefore, operates similarly to other implementations described above (e.g., the reflection mode of operation described above with respect to FIG. 5A) for detecting touches where the optical gratings are disposed directly in a deformable material. In the exemplary implementation of FIG. 11A, however, the optical gratings are disposed within flexible and deformable optical waveguide.

FIG. 11B depicts a variation of the exemplary implementation of FIG. 11A in which touches applied to optical waveguide 1110 may be detected based on a transmission mode of operation, similar to that described above with respect to FIG. 5B. In this exemplary implementation, detector 1140 detects light transmitted through optical gratings 1120 from light source 1130 and a determination may be made of which wavelengths are omitted from the transmitted light (e.g., reflected from optical gratings 1120 and, thus, removed from the transmitted spectrum of light), or which wavelengths are included in the transmitted light (e.g., not reflected by optical gratings 1120, to determine which of optical gratings 1120 have had physical pressure applied to them.

### EXEMPLARY PROCESS

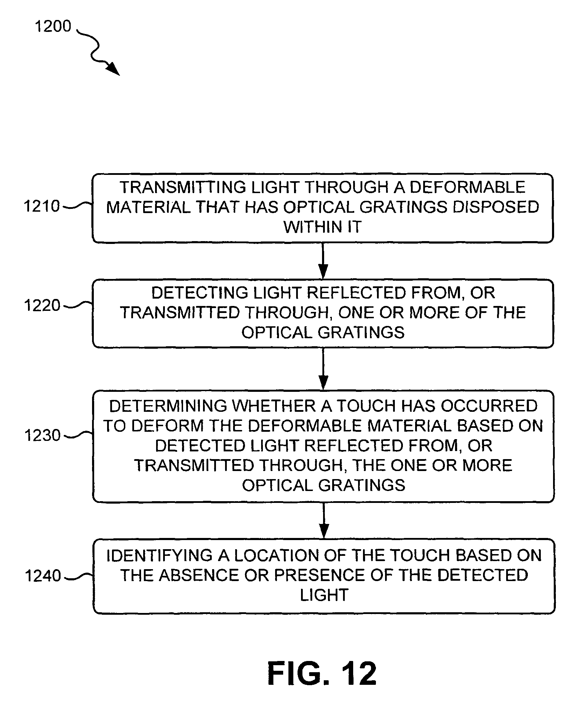

FIG. 12 is a flow diagram illustrating an exemplary process 1200 for determining whether a touch has occurred on a deformable material embedded with optical gratings and for identifying a location of the touch. The exemplary process of FIG. 12 may be performed by processing unit 220, possibly in conjunction with other components of device 200. The exemplary process of FIG. 12 is described below with respect to the exemplary implementation of FIG. 8A. The exemplary process of FIG. 12 may, however, be applied to other exemplary implementations described herein (e.g., FIGS. 5A, 5B, 7, 9, 10, 11A, 11B).

The exemplary process begins with the transmission of light through a deformable material that has optical gratings disposed within it (block 1210). For example, referring to the exemplary implementation of FIG. 8A, light sources 830 may emit light into deformable material 800 through respective columns of optical gratings 810.

Light reflected from, or transmitted through, one or more of the optical gratings disposed within the deformable material may be detected (block 1210). For example, referring to the exemplary implementation of FIG. 8A, light reflected from gratings 810 disposed within material 800 may be detected by respective detectors 840.

A determination may be made whether a touch has occurred to deform the deformable material based on detected light reflected from, or transmitted through, the one or more optical gratings (block 1220). For example, referring to the exemplary implementation of FIG. 8A, multi-wavelength detector 840 for a given column 820 may detect that reflected light of wavelength λ₁ is no longer being received, thus, indicating that a touch has occurred within column 820.

A location of the touch may be identified based on the absence or presence of the detected light (block 1230). Referring again to the exemplary implementation of FIG. 8A, multi-wavelength detector 840 may detect that the reflected light of wavelength λ₁ is no longer being received. Processing unit 220 may identify this lack of detection of wavelength λ₁as a touch having occurred at grating 1 of column 820.

### CONCLUSION

Implementations described herein provide touch sensitive systems that use reflective optical gratings disposed within deformable materials, such as, for example, thin plastic films, for detecting touches upon the deformable materials. Deformation of the optical gratings disposed with the deformable materials via application of physical pressure changes the spectrum of light reflected from the optical gratings to longer wavelengths. Detection of the changes in wavelengths of light reflected from, or transmitted through, the optical gratings may be used to identify the optical gratings that have been deformed by physical pressure, thus, enabling detection of a location of the touch based on a known location of the deformed optical gratings.

The foregoing description of the embodiments described herein provides illustration and description, but is not intended to be exhaustive or to limit the invention to the precise form disclosed. Modifications and variations are possible in light of the above teachings or may be acquired from practice of the invention.

Aspects described herein may be implemented in methods and/or computer program products. Accordingly, aspects may be embodied in hardware and/or in software (including firmware, resident software, micro-code, etc.). Furthermore, aspects described herein may take the form of a computer program product on a computer-usable or computer-readable storage medium having computer-usable or computer-readable program code embodied in the medium for use by or in connection with an instruction execution system. The actual software code or specialized control hardware used to implement these aspects is not limiting. Thus, the operation and behavior of the aspects were described without reference to the specific software code-it being understood that software and control hardware could be designed to implement the aspects based on the description herein.

Further, certain aspects described herein may be implemented as "logic" that performs one or more functions. This logic may include firmware, hardware-such as a processor, microprocessor, an application specific integrated circuit or a field programmable gate array-or a combination of hardware and software.

It should be emphasized that the term "comprises/comprising" when used in this specification is taken to specify the presence of stated features, integers, steps, or components, but does not preclude the presence or addition of one or more other features, integers, steps, components, or groups thereof.

## Claims

1. A touch sensitive device, comprising:
a deformable material (120) having optical gratings (140) embedded therein, wherein deformation of the deformable material by a touch changes an optical path length of one or more of the optical gratings (140) in a vicinity of the touch;
a light source (150) configured to send light into the deformable material (120) to reflect off of, or transmit through, one or more of the optical gratings (140);
a light detector (610, 750, 830) configured to detect at least a portion of the light reflected from, or transmitted through, the one or more of the optical gratings; and
a processing unit (220) configured to determine if the touch has occurred on the deformable material based on the detected reflection of the at least a portion of the light off of the one or more of the optical gratings or based on the detected transmission of the at least a portion of the light through the one or more of the optical gratings.

2. The touch sensitive device of claim 1 wherein the processing unit (220) is further configured to detect a position of the touch on the deformable material (120) based on the detected reflection of the at least a portion of the light off of the one or more of the optical gratings (140) or based on the detected transmission of the at least a portion of the light through the one or more of the optical gratings.

3. The touch sensitive device of any of claims 1 - 2, wherein the at least a portion of the light reflected from, or transmitted through, the one or more of the optical gratings (140) is dependent on deformation of the deformable material (120).

4. The touch sensitive device of any one of claims 1 -3, wherein the optical gratings comprise parabolic shaped optical gratings (910) that reflect the at least a portion of the light from the light source towards the light detector (930).

5. The touch sensitive device of any one of claims 1 - 4, wherein the light includes a first wavelength and wherein deformation of the deformable material (120) in a vicinity of one of the optical gratings (140) causes the at least a portion of the light reflected from the one of the optical gratings to change from the first wavelength to a second wavelength that is different than the first wavelength.

6. The touch sensitive device of any one of claims 1 - 5, wherein the deformable material (120) comprises a thin film of deformable material, and
wherein the thin film of deformable material comprises a plastic, glass or glass-like material embedded with the optical gratings (140).

7. The touch sensitive device of any one of claims 1 - 6, wherein the optical gratings (140) are embedded within the deformable material by locally changing a refractive index of the deformable material, and
wherein the optical gratings are embedded within the deformable material using a mask, ion diffusion/exchange or ultra-violet exposure.

8. The touch sensitive device of any one of claims 1 - 7, wherein changing the optical path length of the one or more of the optical gratings (140) changes a spectrum of light reflected from the one or more of the optical gratings (140) to a longer wave length.

9. The touch sensitive device of any one of claims 1 - 8, wherein the deformable material comprises a deformable optical waveguide (1110) and wherein the optical gratings (1120) are embedded within an interior of the optical waveguide.

10. The touch sensitive device of claim 9, wherein the optical waveguide (1110) comprises an optic fiber.

11. A method; comprising:
transmitting (1210) light through a deformable material (120) having an optical grating (140) embedded therein;
detecting (1220) light reflected from, or transmitted through, the optical grating (140); and
determining (1230) whether the deformable material (120) has been deformed by a touch based on the detected light reflected from, or transmitted through, the optical grating, wherein deformation of the deformable material by the touch changes an optical path length of the optical grating.

12. The method of claim 11, wherein determining whether the deformable material has been deformed by a touch further comprises:
determining whether the deformable material has been deformed by a touch based on a wavelength of the detected light reflected from the optical grating.

13. The method of claim 11, wherein determining whether the deformable material has been deformed by a touch further comprises:
determining whether the deformable material has been deformed by a touch based on an absence, or presence, of a wavelength in detected light transmitted through the optical grating.

14. The method of claim 11, wherein transmitting light through the deformable material further comprises transmitting the light through the deformable material having multiple optical gratings embedded therein, and further comprising:
detecting light reflected from, or transmitted through, one or more of the multiple optical gratings; and
determining whether the deformable material has been deformed by the touch based on the detected light reflected from, or transmitted through, the one or more of the multiple optical gratings, wherein deformation of the deformable material by a touch changes an optical path length of the one or more of the multiple optical gratings in a vicinity of the touch.

15. The method of claim 14, further comprising:
detecting a position (1240) of the touch on the deformable material based on the reflection of at least a portion of the light off of, or the transmission of the at least a portion of the light through, the one or more of the multiple optical gratings.

## Patentansprüche

1. Berührungsempfindliche Vorrichtung, umfassend:
ein verformbares Material (120), in dem optische Gitter (140) eingebaut sind, wobei eine Verformung des verformbaren Materials durch eine Berührung eine optische Weglänge eines oder mehrerer der optischen Gitter (140) in der Nähe der Berührung ändert;
eine Lichtquelle (150), die konfiguriert ist, um Licht in das verformbare Material (120) zu senden, um an einem oder mehreren der optischen Gitter (140) reflektiert oder durch diese(s) durchgelassen zu werden;
einen Lichtdetektor (610, 750, 830), der konfiguriert ist, um mindestens einen Teil des Lichts zu erkennen, das von dem einen oder den mehreren der optischen Gitter reflektiert oder durchgelassen wird; und
eine Verarbeitungseinheit (220), die konfiguriert ist, um zu bestimmen, ob die Berührung auf dem verformbaren Material erfolgt ist, basierend auf der erkannten Reflexion des mindestens einen Teils des Lichts von dem einen oder den mehreren der optischen Gitter oder basierend auf der erkannten Übertragung des mindestens einen Teils des Lichts durch das eine oder die mehreren der optischen Gitter.

2. Berührungsempfindliche Vorrichtung nach Anspruch 1, wobei die Verarbeitungseinheit (220) ferner konfiguriert ist, um eine Position der Berührung auf dem verformbaren Material (120) zu erkennen, basierend auf der erkannten Reflexion des mindestens einen Teils des Lichts von dem einen oder den mehreren der optischen Gitter (140) oder basierend auf der erkannten Übertragung des mindestens einen Teils des Lichts durch das eine oder die mehreren optischen Gitter.

3. Berührungsempfindliche Vorrichtung nach einem der Ansprüche 1 bis 2, wobei der mindestens eine Teil des Lichts, das von dem einen oder den mehreren der optischen Gitter (140) reflektiert oder durchgelassen wird, von der Verformung des verformbaren Materials (120) abhängig ist.

4. Berührungsempfindliche Vorrichtung nach einem der Ansprüche 1 bis 3, wobei die optischen Gitter parabolisch geformte optische Gitter (910) umfassen, die mindestens einen Teil des Lichts von der Lichtquelle in Richtung auf den Lichtdetektor (930) reflektieren.

5. Berührungsempfindliche Vorrichtung nach einem der Ansprüche 1 bis 4, wobei das Licht eine erste Wellenlänge umfasst und wobei eine Verformung des verformbaren Materials (120) in der Nähe eines der optischen Gitter (140) den mindestens einen Teil des Lichts, das von dem einen der optischen Gitter reflektiert wird, dazu veranlasst, sich von der ersten Wellenlänge auf eine zweite Wellenlänge, die anders als die erste Wellenlänge ist, zu ändern.

6. Berührungsempfindliche Vorrichtung nach einem der Ansprüche 1 bis 5, wobei das verformbare Material (120) einen dünnen Film aus verformbarem Material umfasst, und
wobei der dünne Film aus verformbarem Material ein Kunststoff-, Glas- oder glasartiges Material umfasst, das mit den optischen Gittern (140) eingebaut ist.

7. Berührungsempfindliche Vorrichtung nach einem der Ansprüche 1 bis 6, wobei die optischen Gitter (140) in dem verformbaren Material eingebaut sind, indem sie örtlich einen Brechungsindex des verformbaren Materials ändern, und
wobei die optischen Gitter in dem verformbaren Material unter Verwendung einer Maske, von Ionendiffusion/Ionenaustausch oder ultravioletter Exposition eingebaut sind.

8. Berührungsempfindliche Vorrichtung nach einem der Ansprüche 1 bis 7, wobei das Ändern der optischen Weglänge des einen oder der mehreren der optischen Gitter (140) ein Spektrum des Lichts, das von dem einen oder den mehreren der optischen Gitter (140) reflektiert wird, auf eine längere Wellenlänge ändert.

9. Berührungsempfindliche Vorrichtung nach einem der Ansprüche 1 bis 8, wobei das verformbare Material einen verformbaren optischen Wellenleiter (1110) umfasst, und wobei die optischen Gitter (1120) innerhalb des optischen Wellenleiters eingebaut sind.

10. Berührungsempfindliche Vorrichtung nach Anspruch 9, wobei der optische Wellenleiter (1110) eine Lichtleitfaser umfasst.

11. Verfahren, umfassend folgende Schritte:
Übertragen (1210) von Licht durch ein verformbares Material (120), indem ein optisches Gitter (140) eingebaut ist;
Erkennen (1220) von Licht, das von dem optischen Gitter (140) reflektiert oder durchgelassen wird; und
Bestimmen (1230), ob das verformbare Material (120) durch eine Berührung verformt wurde, basierend auf dem erkannten Licht, das von dem optischen Gitter reflektiert oder durchgelassen wird, wobei eine Verformung des verformbaren Materials durch die Berührung eine optische Weglänge des optischen Gitters ändert.

12. Verfahren nach Anspruch 11, wobei das Bestimmen, ob das verformbare Material durch eine Berührung verformt wurde, ferner Folgendes umfasst:
Bestimmen, ob das verformbare Material durch eine Berührung verformt wurde, basierend auf einer Wellenlänge des erkannten Lichts, das von dem optischen Gitter reflektiert wird.

13. Verfahren nach Anspruch 11, wobei das Bestimmen, ob das verformbare Material durch eine Berührung verformt wurde, ferner Folgendes umfasst:
Bestimmen, ob das verformbare Material durch eine Berührung verformt wurde, basierend auf dem Fehlen oder Vorliegen einer Wellenlänge in dem erkannten Licht, das durch das optische Gitter durchgelassen wird.

14. Verfahren nach Anspruch 11, wobei das Durchlassen von Licht durch das verformbare Material ferner das Durchlassen des Lichts durch das verformbare Material umfasst, in dem mehrere optische Gitter eingebaut sind, und ferner umfassend folgende Schritte:
Erkennen des Lichts, das von einem oder mehreren der mehreren optischen Gitter reflektiert oder durchgelassen wird; und
Bestimmen, ob das verformbare Material durch die Berührung verformt wurde, basierend auf dem erkannten Licht, das von dem einen oder den mehreren der mehreren optischen Gitter reflektiert oder durchgelassen wird, wobei die Verformung des verformbaren Materials durch eine Berührung eine optische Weglänge des einen oder der mehreren der mehreren optischen Gitter in der Nähe der Berührung ändert.

15. Verfahren nach Anspruch 14, ferner umfassend folgenden Schritt:
Erkennen einer Position (1240) der Berührung auf dem verformbaren Material, basierend auf der Reflexion mindestens eines Teils des Lichts von oder dem Durchlassen mindestens eines Teils des Lichts durch das eine oder die mehreren der mehreren optischen Gitter.

## Revendications

1. Dispositif sensible au toucher, comprenant :
un matériau déformable (120) présentant des réseaux de diffraction optiques (140) intégrés à celui-ci, dans lequel la déformation du matériau déformable lorsqu'il est touché modifie la longueur de chemin optique d'un ou plusieurs des réseaux de diffraction optiques (140) au voisinage du point touché ;
une source de lumière (100) configurée pour envoyer de la lumière à l'intérieur du matériau déformable (120) afin qu'elle soit réfléchie par ou transmise à travers un ou plusieurs des réseaux de diffraction optiques (140) ;
un détecteur de lumière (610, 750, 830) configuré pour détecter au moins une partie de la lumière réfléchie par ou transmise à travers les un ou plusieurs des réseaux de diffraction optiques ; et
une unité de traitement (220) configurée pour déterminer si le matériau déformable a été touché sur la base de la réflexion détectée par l'au moins une partie de la lumière envoyée par les un ou plusieurs des réseaux de diffraction optiques ou sur la base de la transmission détectée de l'au moins une partie de la lumière à travers les un ou plusieurs des réseaux de diffraction optiques.

2. Dispositif sensible au toucher selon la revendication 1, dans lequel l'unité de traitement (220) est en outre configurée pour détecter une position du point touché sur le matériau déformable (120) sur la base de la réflexion détectée de l'au moins une partie de la lumière provenant des un ou plusieurs des réseaux de diffraction optiques (140) ou sur la base de la transmission détectée de l'au moins une partie de la lumière à travers les un ou plusieurs des réseaux de diffraction optiques.

3. Dispositif sensible au toucher selon l'une quelconque des revendications 1 à 2, dans lequel l'au moins une partie de la lumière réfléchie par ou transmise à travers les un ou plusieurs des réseaux de diffraction optiques (140) dépend de la déformation du matériau déformable (120) .

4. Dispositif sensible au toucher selon l'une quelconque des revendications 1 à 3, dans lequel les réseaux de diffraction optiques comprennent des réseaux de diffraction optiques de forme parabolique (910) qui réfléchissent l'au moins une partie de la lumière provenant de la source de lumière vers le détecteur de lumière (930).

5. Dispositif sensible au toucher selon l'une quelconque des revendications 1 à 4, dans lequel la lumière comprend une première longueur d'onde et dans lequel la déformation du matériau déformable (120) au voisinage de l'un des réseaux de diffraction optiques (140) provoque le passage de l'au moins une partie de la lumière réfléchie par ledit un des réseaux de diffraction optiques de la première longueur d'onde à une deuxième longueur d'onde qui est différente de la première longueur d'onde.

6. Dispositif sensible au toucher selon l'une quelconque des revendications 1 à 5, dans lequel le matériau déformable (120) comprend une couche mince de matériau déformable, et
dans lequel la couche mince de matériau déformable comprend une matière plastique, du verre ou un matériau de type verre incorporé aux réseaux de diffraction optiques (140).

7. Dispositif sensible au toucher selon l'une quelconque des revendications 1 à 6, dans lequel les réseaux de diffraction optiques (140) sont incorporés au matériau déformable par modification locale d'un indice de réfraction du matériau déformable, et
dans lequel les réseaux de diffraction optiques sont incorporés au matériau déformable au moyen d'un masque, d'une diffusion/d'un échange d'ions, ou par exposition aux ultraviolets.

8. Dispositif sensible au toucher selon l'une quelconque des revendications 1 à 7, dans lequel la modification de la longueur de chemin optique desdits un ou plusieurs des réseaux de diffraction optiques (140) modifie le spectre de la lumière réfléchie par les un ou plusieurs des réseaux de diffraction optiques (140) en le faisant passer à une plus grande longueur d'onde.

9. Dispositif sensible au toucher selon l'une quelconque des revendications 1 à 8, dans lequel le matériau déformable comprend un guide d'ondes optique déformable (1110) et dans lequel les réseaux de diffraction optiques (1120) sont incorporés à l'intérieur d'une zone du guide d'ondes optique.

10. Dispositif sensible au toucher selon la revendication 9, dans lequel le guide d'ondes optique (1110) comprend une fibre optique.

11. Procédé, consistant à :
transmettre (1210) de la lumière à travers un matériau déformable (120) dans lequel est incorporé un réseau de diffraction optique (140) ;
détecter (1210) la lumière réfléchie par ou transmise à travers le réseau de diffraction optique (140) ; et
déterminer (1230) si le matériau déformable (120) s'est déformé lorsqu'il a été touché sur la base de la lumière détectée et ayant été réfléchie par ou transmise à travers le réseau de diffraction optique, la déformation du matériau déformable lorsqu'il est touché modifiant la longueur de chemin optique du réseau de diffraction optique.

12. Procédé selon la revendication 11, dans lequel la détermination du fait que le matériau déformable s'est ou non déformé lorsqu'il a été touché consiste en outre à _{:}
déterminer si le matériau déformable s'est déformé lorsqu'il a été touché sur la base d'une longueur d'onde de la lumière détectée après réflexion par le réseau de diffraction optique.

13. Procédé selon la revendication 11, dans lequel la détermination du fait que le matériau déformable s'est ou non déformé lorsqu'il a été touché consiste en outre à _{:}
déterminer si le matériau déformable s'est déformé lorsqu'il a été touché sur la base de l'absence ou de la présence d'une longueur d'onde dans la lumière détectée transmise à travers le réseau de diffraction optique.

14. Procédé selon la revendication 11, dans lequel la transmission de la lumière à travers le matériau déformable consiste en outre à transmettre la lumière à travers le matériau déformable comportant de multiples réseaux de diffraction optiques incorporés à celui-ci, et consistant en outre à _{:}
détecter la lumière réfléchie par ou transmise à travers un ou plusieurs des multiples réseaux de diffraction optiques ; et
déterminer si le matériau déformable s'est déformé lorsqu'il a été touché sur la base de la lumière détectée après réflexion par ou transmission à travers les un ou plusieurs des multiples réseaux de diffraction optiques, la déformation du matériau déformable lorsqu'il a été touché modifiant la longueur de chemin optique des un ou plusieurs des réseaux de diffraction des multiples réseaux de diffraction optiques au voisinage du point touché.

15. Procédé selon la revendication 14, consistant en outre à _{:}
détecter une position (1240) du point touché sur le matériau déformable sur la base de la réflexion d'au moins une partie de la lumière ou de la transmission de l'au moins une partie de la lumière depuis ou à travers lesdits un ou plusieurs des multiples réseaux de diffraction optiques.
